# EUROPÄISCHE PATENTSCHRIFT

(11) **EP 1 312 632 B1**
(45) Veröffentlichungstag und Bekanntmachung des Hinweises auf die Patenterteilung: **07.06.2006**
(21) Anmeldenummer: 02024991.8
(22) Anmeldetag: 07.11.2002
(51) Int. Cl.: C08G 64/30, C08G 64/20

(54) **Verwendung von Katalysatoren zur Herstellung von aliphatischen Oligocarbonatpolyolen**
Use of catalysts for the preparation of aliphatic oligocarbonate-polyols
Utilisation de catalyseurs dans la préparation de polyols d'oligocarbonates

(30) Priorität: 20.11.2001 DE 10156896
(43) Veröffentlichungstag der Anmeldung: 21.05.2003
(73) Patentinhaber: Bayer MaterialScience AG, 51368 Leverkusen (DE)
(72) Erfinder: Hofacker, Steffen, Dr., 35510 Butzbach (DE); Gürtler, Christoph, Dr., 50676 Köln (DE); Tillack, Jörg, Dr., 51427 Bergisch Gladbach (DE)

(56) Entgegenhaltungen:
- EP-A- 0 478 073
- EP-A- 0 893 428
- US-A- 5 095 098
- US-A- 6 156 919
- PATENT ABSTRACTS OF JAPAN vol. 2000, no. 13, 5. Februar 2001 (2001-02-05) -& JP 2000 281630 A (MITSUBISHI CHEMICALS CORP), 10. Oktober 2000 (2000-10-10)
- PATENT ABSTRACTS OF JAPAN vol. 2000, no. 16, 8. Mai 2001 (2001-05-08) -& JP 2001 002624 A (MITSUBISHI CHEMICALS CORP), 9. Januar 2001 (2001-01-09)
- PATENT ABSTRACTS OF JAPAN vol. 1998, no. 01, 30. Januar 1998 (1998-01-30) -& JP 09 241371 A (MITSUBISHI CHEM CORP), 16. September 1997 (1997-09-16)

## Beschreibung

Die vorliegende Erfindung betrifft die Verwendung von Selten Erd Metallen und/oder deren Verbindungen, Metallen der III. Nebengruppe des Periodensystems der Elemente nach Mendelejew und/oder deren Verbindungen als Katalysatoren zur Herstellung aliphatischer Oligocarbonatpolyole durch Umesterung von organischen Carbonaten mit aliphatischen Polyolen.

Oligocarbonatpolyole sind wichtige Vorprodukte, beispielsweise bei der Herstellung von Kunststoffen, Lacken und Klebstoffen. Sie werden z.B. mit Isocyanaten, Epoxiden, (cyclischen) Estern, Säuren oder Säureanhydriden umgesetzt (DE-A 1955902, EP-A 0 343 572). Sie können prinzipiell aus aliphatischen Polyolen durch Umsetzung mit Phosgen (z.B. DE-A 1 595 446, US-A 4533729), bis-Chlorkohlensäureestern (z.B. DE-A 857 948), Diarylcarbonaten (z.B. DE-A 1 915 908), cyclischen Carbonaten (z.B. DE-A 2 523 352, US-A 787632, DE-A 1495299) oder Dialkylcarbonaten (z.B. DE-A 2 555 805, EP-A 0 343 572, EP 0 533 275) hergestellt werden.

Es ist bekannt, dass bei Umsetzung von Arylcarbonaten wie z.B. Diphenylcarbonat mit aliphatischen Polyolen wie z.B. 1,6-Hexandiol ein hinreichender Reaktionsumsatz allein durch Entfernung der freiwerdenden alkoholischen Verbindung (z.B. Phenol) im Zuge der Gleichgewichtsverlagerung der Reaktion erreicht werden kann (z. B. EP-A 0 533 275).

Kommen jedoch Alkylcarbonate (z.B. Dimethycarbonat) zum Einsatz, so werden häufig Umesterungskatalysatoren eingesetzt wie z.B. Alkali- oder Erdalkali-Metalle sowie deren Oxide, Alkoxide, Carbonate, Borate oder Salze organischer Säuren (z.B. US-A 2 210 817, US-A 2 843 567, DE-A 2 523 352, DE-A 1 495 299, EP-A 0 849 303, EP-A 0 754 714, EP-A 0 533 275, WO 97/03104).

Darüber hinaus werden bevorzugt Zinn oder Zinn-organische Verbindungen wie z.B. Zinn-dibutyl, Dibutylzinnlaurat oder aber auch Dibutylzinnoxid (DE-A 2 5233 52, EP-A 0 364 052, EP-A 0 600 417, EP-A 0 343 572, EP-A 0 302 712) sowie Verbindungen des Titans wie z.B. Titan-tertabutylat, Titan-tetraisopropylat oder Titandioxid als Umesterungskatalysatoren verwendet (z.B. US-A 2 843 567, EP-A 0 849 303, EP-A 0 343 572, EP-A- 0 424 219, EP-A 0 754 714).

Aus US 6,156,919 ist unter anderem der Einsatz von Metallalkoholaten aliphatischer C1 bis C8 Alkohole mit Metallen der IIB und IVB sowie der Selten Erd Metalle des Periodensystems nach Mendeleev zur Herstellung von Oligocarbonatdiolen durch Umesterung von Dimethylcarbonat mit aliphatischen Diolen bekannt.

EP-A 0 478 073 beschreibt die Verwendung von gemischten Metalloxiden als Katalysatoren von Verbindungen mit aktiven Wasserstoffatomen mit einem CO₂ Synthon. Als CO₂ Synthon kann u.a. Dimethylcarbonat eingesetzt werden. Als aktive Wasserstoffverbindung werden unter anderem auch Diole genannt.

EP-A 0 893 428 offenbart die Herstellung von Dialkylcarbonaten durch Umesterung von Alkylencarbonaten mit Alkoholen unter Einwirkung von Selten Erd Metalloxiden. JP 2000 28 16 30 und JP 2001 00 26 24 beschreiben jeweils die Herstellung asymmetrischer Dialkylcarbonate unter Einsatz von Oxiden der Lanthanide, Actinide sowie Scandium und Yttrium.

Der Einsatz von Diolen und/oder der Aufbau von Oligocarbonatdiolen durch Umesterungsreaktionen katalysiert mit solchen Oxiden wird jedoch in keinem der Dokumente beschrieben.

JP 09241371 beschreibt die Herstellung von aromatischen Polycarbonatharzen aus aromatischen Dihydroxyverbindungen und einem Carbonatprecursor, wobei spezielle Selten Erd Metall Verbindungen eingesetzt werden. In wie fern sich mit diesen Verbindungen aliphatische Oligocarbonatdiole herstellen lassen ist aus diesem Dokument nicht bekannt.

Die aus dem Stand der Technik bekannten Umesterungskatalysatoren zur Herstellung von aliphatischen Oligocarbonatpolyolen durch Umsetzung von Alkylcarbonaten mit aliphatischen Polyolen weisen aber einige Nachteile auf.

Bei Verwendung von starken Basen wie z.B. Alkali- oder Erdalkali-Metallen oder deren Alkoxide, ist es notwendig, nach erfolgter Oligomerisierung die Produkte in einem zusätzlichen Prozessschritt zu neutralisieren (z.B. EP-A 0 533 275). Werden hingegen Ti-Verbindungen als Katalysatoren verwendet, so kann es bei Lagerung des resultierenden Produktes zu unerwünschten Verfärbungen (Gelbfärbung) kommen was u.a. auf die Anwesenheit von Ti(III)-Verbindungen neben gleichzeitig anwesender Ti(IV)-Verbindungen und/oder durch die Komplexbildungsneigung des Titans hervorgerufen wird.

In jüngster Zeit wurden Zinn-organische Verbindungen als potentielle Cancerogene beim Menschen erkannt. Sie sind somit unerwünschte Bestandteile, die in Folgeprodukten der Oligocarbonatpolyole verbleiben, sofern die bisher bevorzugten Verbindungen wie Dibutylzinnoxid oder Dibutylzinnlaurat als Katalysatoren zum Einsatz kommen.

Weiterhin ist es trotz aller bisher verwendeten Katalysatoren nicht möglich gewesen, die Reaktionstemperatur, die üblicherweise zwischen 150°C und 230°C (EP-A 0 533 275, EP-A 0 364 052) liegt, zu senken, um die Bildung von Nebenprodukten wie z.B. die Bildung von Ethem oder Vinylgruppen, die bei erhöhter Temperatur entsehen können, weitgehend zu vermeiden. Diese unerwünschten Endgruppen fuhren als Kettenabrecher für nachfolgende Polymerisationsreaktionen wie z.B. im Falle der Polyurethanreaktion mit mehrfachfunktionellen (Poly)Isocyanten zu einer Erniedrigung der Netzwerkdichte und damit zu schlechteren Produkteigenschaften wie z.B. Lösemittel- oder Säurebeständigkeit (z.B. DE-A 1 9159 08). Zum anderen bedeutet eine schnellere Umesterungsreaktion eine Erhöhung der Raum/Zeit-Ausbeute (Verringerung der Kesselbelegzeiten) und damit eine Steigerung der Wirtschaftlichkeit, was mit den bisher eingesetzten Katalysatoren nicht erreicht werden konnte.

Aufgabe der vorliegenden Erfindung ist es daher, geeignete Katalysatoren für die Umesterungsreaktion von organischen Carbonaten, insbesondere Dialkylcarbonaten mit aliphatischen Polyolen zur Herstellung von aliphatischen Oligocarbonatpolyolen bereitzustellen, die eine höhere Aktivität besitzen und somit die oben genannten Nachteile nicht aufweisen.

Überraschender Weise wurde nun gefunden, dass die erfindungsgemäße Aufgabe durch die Verwendung von Tris-2,2,6.6-tetramethyl-3,5-heptadionaten und/oder Trifluormethansulfonaten der Selten Erd Metalle mit Ausnahme von Cer-Verbindungen, sowie von Tris-2,2,6,6-tetramethyl-3,5-heptadionaten der Metalle der III. Nebengruppe des Periodensystems der Elemente und Yttrium-und Lanthantrifluormethansulfonat gelöst werden konnte.

Gegenstand der vorliegenden Erfindung ist somit die Verwendung von Tris-2,2,6.6-tetramethyl-3,5-heptadionaten und/oder Trifluormethansulfonaten der Selten Erd Metalle mit Ausnahme von Cer-Verbindungen, sowie von Tris-2,2,6,6-tetramethyl-3,5-heptadionaten der Metalle der III. Nebengruppe des Periodensystems der Elemente und Yttrium-und Lanthantrifluormethansulfonat als Umesterungskatalysatoren zur Herstellung von aliphatischen Oligocarbonatpolyolen mit einem Molekulargewicht zwischen 500 und 5000 aus aliphatischen Polyolen und organischen Carbonaten.

Es können erfindungsgemäß auch Mischungen von zwei und mehr Katalysatoren verwendet werden.

Als erfindungsgemäß verwendete Katalysatoren seinen zum Beispiel genannt: Yttriumtrifluormethansulfonat, Lanthantrifluormethansulfonat, Praseodymtrifluormethansulfonat, Neodymtrifluormethansulfonat, Promethiumtrifluormethansulfonat, Samariumtrifluormethansulfonat, Europiumtrifluormethansulfonat, Gadoliniumtrifluormethansulfonat, Terbiumtrifluormethansulfonat, Dysprosiumtrifluormethansulfonat, Holmiumtrifluormethansulfonat, Erbiumtrifluormethansulfonat Thuliumtrifluormethansulfonat, Ytterbiumtrifluormethansulfonat, Lutetiumtrifluormethansulfonat, Scandium tris(2,2,6,6-tetramethyl-3,5-heptandionat), Yttrium tris(2,2,6,6-tetramethyl-3,5-heptandionat), Lanthan tris(2,2,6,6-tetramethyl-3,5-heptandionat), Praseodym tris(2,2,6,6-tetramethyl-3,5-heptandionat), Neodym tris(2,2,6,6-tetramethyl-3,5-heptandionat), Promethium tris(2,2,6,6-tetramethyl-3,5-heptandionat), Samarium tris(2,2,6,6-tetramethyl-3,5-heptandionat) Europium tris(2,2,6,6-tetramethyl-3,5-heptandionat), Gadolinium tris(2,2,6,6-tetramethyl-3,5-heptandionat), Terbium tris-(2,2,6,6-tetramethyl-3,5-heptandionat), Dysprosium tris(2,2,6,6-tetramethyl-3,5-heptandionat), Holmium tris(2,2,6,6-tetramethyl-3,5-heptandionat), Erbium tris(2,2,6,6-tetramethyl-3,5-heptandionat), Thulium tris(2,2,6,6-tetramethyl-3,5-heptandionat), Ytterbium tris(2,2,6,6-tetramethyl-3,5-heptandionat) oder Lutetium tris(2,2,6,6-tetramethyl-3,5-heptandionat).

Die erfindungsgemäß verwendeten Katalysatoren können sowohl als Feststoff als auch in Lösung - z.B. gelöst in einem der Edukte - eingesetzt werden.

Weiterhin ist es natürlich möglich, neben der Verwendung von einzelnen erfindungsgemäß verwendeten Katalysatoren auch Mischungen aus zweien oder mehreren erfindungsgemäß verwendeten Katalysatoren einzusetzen.

Die Konzentration der erfindungsgemäß verwendeten Katalysatoren und/oder der Mischungen liegt zwischen 0,01 ppm bis 10000 ppm, bevorzugt zwischen 0,1 ppm und 5000 ppm besonders bevorzugt zwischen 1 ppm und 1000 ppm bezogen auf die Masse der eingesetzten Edukte.

Die Reaktionstemperatur der Umesterungsreaktion eines organischen Carbonats mit einem aliphatischen Polyol unter erfindungsgemäßer Verwendung der Katalysatoren zur Herstellung von aliphatischen Oligocarbonatenpolyolen mit einer Molmasse zwischen 500 und 5000 liegt zwischen 40°C und 250°C, bevorzugt zwischen 60°C und 230°C und besonders bevorzugt zwischen 80°C und 210°C.

Als organische Carbonate können z.B. Aryl-, Alkyl- öder Alyklencarbonate, die durch Ihre einfache Herstellbarkeit und gute Verfügbarkeit bekannt sind (EP-A 0 534 454, EP-A 0 599 287, EP-A 3 445 552) verwendet werden. Als Beispiele seien genannt: Diphenylcarbonat (DPC), Dimethylcarbonat (DMC), Diethylcarbonat (DEC), Ethylencarbonat, etc.

Bevorzugt werden Diphenylcarbonat, Dimethylcarbonat und Diethylcarbonat eingesetzt. Ganz besonders bevorzugt werden Diphenylcarbonat und Dimethylcarbonat verwendet.

Als Reaktionspartner der Umesterungsreaktion der organischen Carbonate zur Herstellung aliphatischer Oligocarbonatpolyole unter erfindungsgemäßer Verwendung der Katalysatoren können aliphatische Alkohole mit 2 bis 25 C-Atomen (linear, cyclisch, verzweigt, unverzweigt, gesättigt oder ungesättigt) mit einer OH-Funktionalität ≥ 2 (primär, sekundär oder tertiär) eingesetzt werden.

Als Beispiele seien genannt: Ethylenglykol, 1,3-Propylenglykol, 1,3-Butandiol, 1,4-Butandiol, 1,6-Hexandiol, 2-Ethyl-Hexandiol, Bisphenol A, Trimethylolpropan, Pentaerythrit, etc.

Ebenso können Polyole erfindungsgemäß eingesetzt werden, die aus einer Ringöffnungsreaktion eines Lactons mit einem aliphatischen Alkohol (linear, cyclisch, verzweigt, unverzweigt, gesättigt oder ungesättigt) mit einer OH-Funktionalität ≥ 2 (primär, sekundär oder tertiär) hervorgegangen ist wie z.B. das Addukt aus ε-Caprolacton und 1,6 Hexandiol oder ε-Caprolacton und Trimethylolpropan sowie deren Mischungen.

Schließlich können auch Mischungen verschiedener oben erwähnter Polyole als Edukte eingesetzt werden.

Bevorzugt werden aliphatische oder cycloaliphatische verzweigte oder unverzweigte, primäre oder sekundäre Polyole mit einer OH-Funktionalität ≥ 2. Besonders bevorzugt werden aliphatische, verzweigte oder unverzweigte, primäre Polyole mit einer Funktionalität ≥ 2.

Die Umesterungsreaktion zwischen einem organischen Carbonat und einem aliphatischen Polyol unter erfindungsgemäßer Verwendung der Katalysatoren kann sowohl unter Atmosphärendruck als auch unter vermindertem oder erhöhtem Druck von 10⁻³ bis 10³ bar durchgeführt werden.

### Beispiele

### Beispiel 1

### Ermittlung der Katalysatoraktivität der erfindungsgemäß verwendeten Katalysatoren im Vergleich mit der Aktivität von Katalysatoren aus dem Stand der Technik für die Reaktion DMC und 1-Hexanol

Um im Vorfeld eine Vorauswahl geeigneter Umesterungskatalysatoren für die Herstellung von aliphatischen Oligocarbonaten aus organsichen Carbonaten (hier im speziellen Dimethylcarbonat) und aliphatischen Polyolen (z.B. 1,6 Hexandiol) treffen zu können, wurde in einem 20 ml Rollrandglasgefäß Dimethylcarbonat (3,06 g) und 1-Hexanol (6,94 g) im Molverhältnis 1:2 zusammen mit je einer konstanten Menge (5,7·10⁻⁶ mol) eines Katalysators (siehe Tabelle 1) gemischt und mit einem Septum aus Naturkautschuk inkl. Gasauslass verschlossen. Lag der eingesetzte Katalysator bei Raumtemperatur im festen Aggregatszustand vor, so wurde dieser in einem der Edukte zunächst gelöst. Unter Rühren wurde das Reaktionsgemisch auf 80°C für sechs Stunden erhitzt. Nach Abkühlung auf Raumtemperatur erfolgte eine Analyse des Produktspektrums mittels Gaschromatographie gegebenenfalls gekoppelt mit massenspektrometrischen Untersuchungen. Die Gehalte an Umsetzungsprodukten nämlich an Methyl-Hexyl-Carbonat bzw. Dihexylcarbonat, welche als Maß für die Aktivität des verwendeten Umesterungskatalysators aufgefasst werden können, wurden durch integrale Auswertung der jeweiligen Gaschromatogramme quantifiziert. Die Ergebnisse dieser Aktivitätsuntersuchungen der erfindungsgemäß verwendeten Katalysatoren in direktem Vergleich mit aus dem Stand der Technik bekannten Katalysatoren (wie z.B. Dibutylzinnoxid, Dibutylzinnlaurat, Titantertaisopropylat oder Magnesiumcarbonat) sind in Tabelle 1 aufgeführt.

Die Auswahl der erfindungsgemäß verwendeten Katalysatoren in Tabelle 1 ist beispielhaft.

**Tabelle 1 Eingesetzte Katalysatoren und Gehalte an Umsetzungsprodukten**

| Katalysatornummer | Katalysator | Gehalt an Methyl-Hexyl-Carbonat [Flächen-%] | Gehalt an Dihexyl-Carbonat [Fächen-%] | Summe der Gehalte [Flächen-%] |
|---|---|---|---|---|
| 1 | ohne Katalysator | 4,0 | 0,1 | 4,1 |
| 2 | Dibutylzinnoxid | 5,1 | 0,2 | 5,3 |
| 3 | Dibutylzinnlaurat | 3,4 | 0,1 | 3,5 |
| 4 | Titantetraisopropylat | 1,9 | 0,0 | 1,9 |
| 5 | Magnesiumcarbonat | 2,1 | 0,1 | 2,2 |
| 6 | Scandiumtriflat | 0,7 | 0,0 | 0,7 |
| 7 | Yttriumtriflat | 13,5 | 1,5 | 15,0 |
| 8 | Yttrium-2-ethylhexanoat | 6,5 | 0,3 | 6,8 |
| 9 | Lanthantriflat | 8,8 | 0,7 | 9,5 |
| 10 | Lanthan-2-ethylhexanoat | 4,5 | 0,1 | 4,6 |
| 11 | Cer(IV)triflat | 5,4 | 0,2 | 5,6 |
| 12 | Praseodymtriflat | 10,9 | 1,0 | 11,9 |
| 13 | Praseodym (dpm)₃ | 11,2 | 0,8 | 12,0 |
| 14 | Neodymtriflat | 11,2 | 1,1 | 12,3 |
| 15 | Neodym (dpm)₃ | 10,4 | 0,6 | 11,1 |
| 16 | Samariumtriflat | 12,9 | 1,5 | 14,4 |
| 17 | Samarium (dpm)₃ | 20,4 | 3,5 | 23,9 |
| 18 | Europiumtriflat | 11,4 | 1,1 | 12,5 |
| 19 | Europium (dpm)₃ | 17,7 | 2,2 | 19,9 |
| 20 | Gadoliniumtriflat | 12,5 | 1,3 | 13,8 |
| 21 | Gadolinium (dpm)₃ | 20,6 | 3,4 | 24,0 |
| 22 | Terbiumtriflat | 14,1 | 1,8 | 15,9 |
| 23 | Terbium (dpm)₃ | 24,5 | 6,0 | 30,5 |
| 24 | Dysprosiumtriflat | 16,3 | 2,6 | 18,9 |
| 25 | Dysprosium (dpm)₃ | 26,0 | 8,0 | 34,0 |
| 26 | Holmiumtriflat | 17,0 | 2,9 | 19,9 |
| 27 | Holmium (dpm)₃ | 25,4 | 7,3 | 32,7 |
| 28 | Erbiumtriflat | 14,8 | 2,0 | 16,8 |
| 29 | Erbium (dpm)₃ | 27,0 | 11,0 | 38,0 |
| 30 | Thuliumtriflat | 15,9 | 2,4 | 18,3 |
| 31 | Thulium (dpm)₃ | 25,8 | 7,7 | 33,5 |
| 32 | Ytterbiumtriflat | 20,1 | 4,5 | 24,6 |
| 33 | Ytterbium (dpm)₃ | 26,8 | 11,3 | 38,1 |
| 34 | Lutetiumtriflat | 13,6 | 1,5 | 15,1 |

wobei "triflat" die Bedeutung von trifluormethansulfonat und "(dpm)₃" die Bedeutung von tris(2,2,6,6-tetramethyl-3,5-heptandionat) besitzt.

Wie sich aus Spalte fünf der Tabelle 1 ergibt, liegt die Aktivität der erfindungsgemäß verwendeten Katalysatoren deutlich über den Vergleichskatalysatoren, welche aus dem Stand der Technik bekannt sind.

### Beispiel 2

### Ermittlung der Katalysatoraktivität der erfindungsgemäß verwendeten Katalysatoren im Vergleich mit der Aktivität von Katalysatoren aus dem Stand der Technik für die Reaktion DMC und 1,6-Hexandiol zur Herstellung des entprechenden aliphatischen Oligocarbonatdiols

Zur Ermittlung der Katalysatoraktivität für die Herstellung von aliphatischen Oligocarbonaten aus organischen Carbonaten (hier z.B. Dimethylcarbonat) und aliphatischen Polyolen (hier z.B. 1,6 Hexandiol), wurde in einem 20 ml Rollrandglasgefäß Dimethylcarbonat (4,15 g) und 1,6-Hexandiol (5,85 g) zusammen mit je einer konstanten Menge (5,7·10⁻⁶ mol) eines Katalysators (siehe Tabelle 2) gemischt und mit einem Septum aus Naturkautschuk inkl. Gasauslass verschlossen. Das Molverhälnis vom Dimethylcarbonat und 1,6-Hexandiol wurde so gewählt, dass bei vollständiger Umsetzung ein aliphatisches Oligocarbonatdiol mit einer mittleren Molmasse von 2000 hervorgeht. Lag der eingesetzte Katalysator bei Raumtemperatur im festen Aggregatszustand vor, so wurde dieser in einem der Edukte zunächst gelöst. Unter Rühren wurde das Reaktionsgemisch auf 80°C für sechs Stunden erhitzt. Nach Abkühlung auf Raumtemperatur erfolgte eine Analyse des Produktspektrums mittels Gaschromatographie gegebenenfalls gekoppelt mit massenspektrometrischen Untersuchungen.

Die Gehalte an zielgerechten Umsetzungsprodukten (z.B. Monoester, Diester, Oligocarbonate, etc.), welche als Maß für die Aktivität des verwendeten Umesterungskatalysators aufgefasst werden können, wurden zunächst mit Hilfe gaschromatographischer und massenspektometrischer Methoden identifiziert und anschließend durch integrale Auswertung der jeweiligen Gaschromatogramme quantifiziert. Die Ergebnisse dieser Aktivitätsuntersuchungen von erfindungsgemäß verwendeten Katalysatoren in direktem Vergleich mit aus dem Stand der Technik bekannten Katalysatoren (wie z.B. Dibutylzinnoxid, Dibutylzinnlaurat, Titantetraisopropylat oder Magnesiumcarbonat) sind in Tabelle 2 aufgeführt.

Die Auswahl der erfindungsgemäß verwendeten Katalysatoren in Tabelle 2 ist beispielhaft.

**Tabelle 2 Eingesetzte Katalysatoren und Gehalte an Umsetzungsprodukten**

| Katalysatornummer | Katalysator | Gehalt an Umsetzungsprodukten [Flächen-%] |
|---|---|---|
| 1 | ohne Katalysator | 4,8 |
| 3 | Dibutylzinnlaurat | 3,3 |
| 4 | Titantetraisopropylat | 1,6 |
| 5 | Magnesiumcarbonat | 4,5 |
| 6 | Scandiumtriflat | 1,3 |
| 7 | Yttriumtriflat | 15,3 |
| 8 | Yttrium-2-ethylhexanoat | 5,4 |
| 9 | Lanthantriflat | 12,2 |
| 10 | Lanthan-2-ethylhexanoat | 11,1 |
| 25 | Dysprosium (dpm)₃ | 18,6 |
| 27 | Holmium (dpm)₃ | 20,2 |
| 29 | Erbium (dpm)₃ | 41,1 |
| 32 | Ytterbiumtriflat | 46,3 |
| 33 | Ytterbium (dpm)₃ | 29,5 |

wobei "triflat" die Bedeutung von trifluormethansulfonat und "(dpm)₃" die Bedeutung von tris(2,2,6,6-tetramethyl-3,5-heptandionat) besitzt.

Diese Ergebnisse machen deutlich, dass die Aktivität der erfindungsgemäß verwendeten Katalysatoren deutlich über denen aus dem Stand der Technik bekannten liegt.

Somit ist es möglich durch Verwendung der erfindungsgemäß verwendeten Katalysatoren die oben beschriebenen Nachteile bei der Herstellung von aliphatischen Oligocarbonatpolyolen durch Umesterung von organischen Carbonaten, insbesondere Alkylcarbonaten und aliphatischen Polyolen mit einer OH-Funktionalität ≥ 2 wie z.B. hohe Reaktionstemperaturen, die zu unerwünschten Nebenreaktionen führen , lange Kesselbelegzeiten, etc. zu vermeiden

## Patentansprüche

1. Verwendung von Tris-2,2,6,6-tetramethyl-3,5-heptadionaten und/oder Trifluormethansulfonaten der Selten Erd Metalle mit Ausnahme von Cer-Verbindungen, sowie von Tris-2,2,6,6-tetramethyl-3,5-heptadionaten der Metalle der III. Nebengruppe des Periodensystems der Elemente und Yttrium-und Lanthantrifluormethansulfonat als Umesterungskatalysatoren zur Herstellung von aliphatischen Oügocarbonatpolyolen mit einem Molekulargewicht zwischen 500 und 5000 aus aliphatischen Polyolen und organischen Carbonaten.

2. Verwendung nach Anspruch 1, **dadurch gekennzeichnet, dass** auch Mischungen von zwei oder mehreren Katalysatoren eingesetzt werden

3. Verwendung nach Anspruch 1, **dadurch gekennzeichnet, dass** als organische Carbonate Dimethylcarbonat und/oder Diethylcarbonat und/oder Diphenylcarbonat eingesetzt werden

4. Verwendung nach Anspruch 11, **dadurch gekennzeichnet, dass** Dimethylcarbonat eingesetzt wird

5. Verwendung nach Anspruch 1, **dadurch gekennzeichnet, dass** als aliphatische Polyole Diole und/oder Triole und/oder Ringöffnungsadukte aus einen aliphatischen Diol und einem Lacton eingesetzt werden

6. Verwendung nach Anspruch 14, **dadurch gekennzeichnet, dass** aliphatische Diole eingesetzt und/oder Ringöffnungsaddukte aus einem aliphatischen Diol und ε-Caprolacton eingesetzt werden

7. Verwendung nach Anspruch 15, **dadurch gekennzeichnet, dass** 1,6 Hexandiol und/oder das Ringöffnungsprodukt aus 1,6 Hexandiol und ε-Caprolacton und/oder Mischungen daraus eingesetzt wird

8. Verwendung nach Anspruch 1, **dadurch gekennzeichnet, dass** die Katalysatorkonzentration zwischen 0,01 ppm bis 10000 ppm bezogen auf die Masse der eingesetzten Edukte liegt

## Claims

1. Use of tris-2,2,6,6-tetramethyl-3,5-heptanedionates and/or trifluoromethanesulphonates of rare earth metals, except for cerium compounds, and also of tris-2,2,6,6-tetramethyl-3,5-heptanedionates of metals from transition group III of the Periodic Table of the elements, and yttrium trifluoromethanesulphonate and lanthanum trifluoromethanesulphonate, as transesterification catalysts for preparing aliphatic oligocarbonate polyols having a molecular weight between 500 and 5000 from aliphatic polyols and organic carbonates.

2. Use according to Claim 1, **characterized in that** mixtures of two or more catalysts are also used.

3. Use according to Claim 1, **characterized in that** organic carbonates used are dimethyl carbonate and/or diethyl carbonate and/or diphenyl carbonate.

4. Use according to Claim 3, **characterized in that** dimethyl carbonate is used.

5. Use according to Claim 1, **characterized in that** aliphatic polyols used are diols and/or triols and/or ring-opening adducts of an aliphatic diol and a lactone.

6. Use according to Claim 5, **characterized in that** aliphatic diols are used and/or ring-opening adducts of an aliphatic diol and ε-caprolactone are used.

7. Use according to Claim 6, **characterized in that** 1,6-hexanediol and/or the ring-opening product of 1,6-hexanediol and ε-caprolactone and/or mixtures thereof is or are used.

8. Use according to Claim 1, **characterized in that** the catalyst concentration lies between 0.01 ppm to 10 000 ppm based on the mass of the reactants used.

## Revendications

1. Utilisation de tris-2,2,6,6-tétraméthyl-3,5-heptadionates et/ou de trifluorométhanesulfonates de métaux des terres rares à l'exception des dérivés du cérium, ainsi que de tris-2,2,6,6-tétraméthyl-3,5-heptadionates des métaux du sous-groupe III de la Classification Périodique des éléments et des trifluorométhanesulfonates de l'yttrium et du lanthane en tant que catalyseurs de transestérification pour la préparation d'oligocarbonate-polyols aliphatiques ayant un poids moléculaire de 500 à 5 000 à partir de polyols aliphatiques et de carbonates organiques.

2. Utilisation selon la revendication 1, **caractérisée en ce que** l'on utilise des mélanges de deux ou plusieurs catalyseurs.

3. Utilisation selon la revendication 1, **caractérisée en ce que** les carbonates organiques mis en oeuvre sont le carbonate de diméthyle et/ou le carbonate de diéthyle et/ou le carbonate de diphényle.

4. Utilisation selon la revendication 1, **caractérisée en ce que** le carbonate organique mis en oeuvre est le carbonate de diméthyle.

5. Utilisation selon la revendication 1, **caractérisée en ce que** les polyols aliphatiques mis en oeuvre sont des diols et/ou des triols et/ou des produits obtenus par ouverture du cycle à partir d'un diol aliphatique et d'une lactone.

6. Utilisation selon la revendication 14, **caractérisé en ce que** l'on met en oeuvre des diols aliphatiques et/ou des adducts obtenus par ouverture du cycle à partir d'un diol aliphatique et de l'ε-caprolactone.

7. Utilisation selon la revendication 15, **caractérisée en ce que** l'on met en oeuvre le 1,6-hexanediol et/ou le produit obtenu par ouverture du cycle à partir du 1,6-hexanediol et de l'ε-caprolactone et/ou un mélange de ceux-ci.

8. Utilisation selon la revendication 1, **caractérisée en ce que** la concentration du catalyseur représente de 0,01 ppm à 10 000 ppm par rapport au poids des composants de départ.
